(19) Europäisches Patentamt
European Patent Office
Office européen des brevets

(11) **EP 2 692 885 A1**

# EUROPEAN PATENT APPLICATION
published in accordance with Art. 153(4) EPC

(43) Date of publication:
05.02.2014 Bulletin 2014/06

(21) Application number: 12764182.7

(22) Date of filing: 08.03.2012

(51) Int Cl.:
*C22C 38/00* (2006.01)  *C22C 38/34* (2006.01)
*C22C 38/54* (2006.01)  *F16F 1/02* (2006.01)
*C21D 8/06* (2006.01)  *C21D 9/52* (2006.01)

(86) International application number:
**PCT/JP2012/055994**

(87) International publication number:
**WO 2012/132821 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 31.03.2011 JP 2011080824

(71) Applicant: Kabushiki Kaisha Kobe Seiko Sho
**Chuo-ku,
Kobe-shi,
Hyogo 651-8585 (JP)**

(72) Inventors:
• **OURA, Hiroshi**
**Hyogo 657-0863 (JP)**
• **YOSHIHARA, Nao**
**Hyogo 657-0863 (JP)**

(74) Representative: **Müller-Boré & Partner**
**Patentanwälte PartG mbB**
**Grafinger Straße 2**
**81671 München (DE)**

(54) **SPRING STEEL WIRE ROD HAVING EXCELLENT WIRE DRAWABILITY AND EXCELLENT FATIGUE CHARACTERISTICS AFTER WIRE DRAWING, AND SPRING STEEL WIRE HAVING EXCELLENT FATIGUE CHARACTERISTICS AND EXCELLENT SPRING FORMABILITY**

(57)    This spring steel wire rod having excellent wire drawability and excellent fatigue characteristics after wire drawing and this spring steel wire having excellent fatigue characteristics and excellent spring formability are characterized by containing 0.50% or more but less than 0.70% of C, 1.0-2.5% of Si, 0.50-1.50% of Mn, 0.5% or less of Cr (including 0%), 0.001-0.005% of B, 0.005% or less of N (excluding 0%), 0.020% or less of P (excluding 0%), 0.020% or less of S (excluding 0%), 0.03% or less of Al (excluding 0%) and 0.0020% or less of O (excluding 0%), with the balance consisting of iron and unavoidable impurities, and are characterized in that the area ratio of the pearlite structure in the entire structure is 85% or more.

EP 2 692 885 A1

**Description**

Technical Field

The present invention relates to a spring steel wire rod having excellent wire drawability and excellent fatigue characteristics after wire drawing and a spring steel wire having excellent fatigue characteristics and excellent spring formability, in particular to a spring (worked spring) subjected to cold drawing and used.

Background Art

A valve spring, a clutch spring, and a suspension spring used in an engine, a clutch, and a suspension are required to have a higher strength in accordance with the weight reduction and stress increase of an automobile or the like. With this, stress applied to a spring increases and hence a spring excellent in fatigue strength is desired.

In recent years, a valve spring or a suspension spring is mostly manufactured generally by drawing a hot-rolled wire rod (steel wire rod) to produce a steel wire and winding at ordinary temperatures an oil hardened and tempered wire (OT wire) obtained by applying quenching and tempering to the steel wire. The structure of the OT wire mainly comprises a tempered martensite structure and hence has the advantages of being easy to secure a high strength and being excellent in fatigue strength and settling resistance. The drawback however is that extensive equipment and processing cost are required for heat treatment of quenching and tempering.

Meanwhile, there is the case of manufacturing a spring by using a steel wire (hard-drawn wire) drawn but not subjected to heat treatment thereafter and applying cold winding (hereunder a spring obtained by using a steel wire (hard-drawn wire) drawn but not subjected to heat treatment thereafter as stated above is referred to as a "hard-drawn spring" in some cases). For example, Japanese Industrial Standards stipulate a piano wire of fifth class as a steel wire for a valve spring or a steel wire conforming to the steel wire particularly in piano wires corresponding to steel wires (JIS G 3522).

The advantage of such a hard-drawn spring is that the manufacturing cost is low because heat treatment is not required. A problem of a hard-drawn spring or a hard-drawn wire used for manufacturing such a spring however is that fatigue characteristics of a level corresponding to an OT wire is hardly obtained. Further, another problem is that internal hardness is likely to be uneven and the free length varies during spring forming (namely, spring formability is inferior).

In view of the above situation, it is desired to exhibit excellent spring formability and excellent fatigue characteristics in the case of using not only an OT wire but also a hard-drawn wire as a steel wire used for spring forming and in addition a steel wire rod used for manufacturing such a steel wire is also desired.

There is Patent Literature 1 as an example of aiming at improving the fatigue characteristics of a hard-drawn spring. In Patent Literature 1, a pearlite fraction is stipulated in relation to a carbon content, further a pearlite nodule size is reduced by using V as an essential element, and thereby both a high strength of 1,890 MPa or more in tensile strength and settling resistance are secured in the case of 3.5 mm in wire diameter. It is estimated, however, that the deterioration of wire drawability is not avoidable if strength is increased merely by increasing a carbon content. Further, it is estimated that further study is necessary if fatigue characteristics are to be further increased after wire drawing. Furthermore, it is estimated that, if V is added as an essential element, hardenability tends to increase, hence wire drawing speed has to be reduced in order to obtain a pearlite structure at patenting treatment before wire drawing, and therefore productivity deteriorates and manufacturing cost increases.

Meanwhile, Patent Literature 2 stipulates the maximum thickness of TiN type inclusions in order to improve the fatigue characteristics of a spring wire rod. In the case of further improving fatigue characteristics after wire drawing, however, fatigue strength may possibly deteriorate due to fatigue breakage originated from TiN type inclusions and hence it is estimated that study from another viewpoint has to be carried out in order to further improve fatigue characteristics.

Citation List

Patent Literature

Patent Literature 1: JP-A No. 2002-180200
Patent Literature 2: JP-A No. 2009-024245

Summary of Invention

Technical Problem

The present invention has been established in order to solve the aforementioned problems of the existing technologies and an object thereof is to provide a spring steel wire rod having excellent wire drawability and excellent fatigue characteristics after wire drawing and a spring steel wire having excellent fatigue characteristics and excellent spring formability.

Solution to Problem

A spring steel wire rod according to the present invention that has solved the above problems is characterized in that:

the spring steel wire rod contains
0.50% or more but less than 0.70% of C (% means "% by mass", the same shall apply for a chemical component composition hereunder),
1.0-2.5% of Si,
0.50-1.50% of Mn,
0.5% or less of Cr (including 0%),
0.0010-0.0050% of B,
0.0050% or less of N (excluding 0%),
0.020% or less of P (excluding 0%),
0.020% or less of S (excluding 0%),
0.03% or less of Al (excluding 0%), and
0.0020% or less of O (excluding 0%),
with the balance consisting of iron and unavoidable impurities; and
the area ratio of the pearlite structure in the entire structure is 85% or more.

As the above spring steel wire rod, it is further desirable to satisfy that: the number of BN type chemical compounds having circle equivalent diameters of 100 nm or more but less than 1,000 nm existing in a pearlite structure is 100 or less (including 0) in an observation visual field of 2,000 $\mu m^2$; and the number of BN type chemical compounds having circle equivalent diameters of 1,000 nm or more existing in the pearlite structure is 10 or less (including 0) in an observation visual field of 2,000 $\mu m^2$.

As the above spring steel wire rod, it is further desirable to contain one or more elements selected from the group consisting of 0.05-0.40% of V and 0.05-0.80% of Ni and satisfy that dissolved N is 0.0020% or less (including 0%).

The present invention includes a spring steel wire obtained by using a spring steel wire rod stated above and characterized in that the difference between the Vickers hardness (Hvs) at a surface part and the Vickers hardness (Hvh) at an inner part satisfies the expression (1) below,

$$(\text{Hvs} \cdot \text{Hvh}) \leq 100 \qquad\qquad (1)$$

[here, Hvs represents the maximum Vickers hardness at the part of D (referred to as the diameter of a steel wire, the same shall apply here under)/16 to the part of D/4 and Hvh represents the minimum Vickers hardness at the part of D/4 to the part of D/2].

In the present invention here, a "circle equivalent diameter" means the diameter of a circle having an area identical to a BN type chemical compound. Further, a "BN type chemical compound" intended in the present invention allows to include, besides substances comprising BN (boron nitride), composite inclusions such as substances mainly containing BN and BN chemical compounds having MnS as the nuclei.

Advantageous Effects of Invention

In the present invention, since a chemical component composition is adjusted appropriately and the area ratio of a pearlite structure is adjusted, it is possible to materialize a spring steel wire rod having excellent wire drawability and excellent fatigue characteristics after wire drawing and a spring steel wire having excellent fatigue characteristics and excellent spring formability. Moreover, it is possible to further improve the fatigue characteristics by controlling the shape of BN type chemical compounds.

A spring steel wire according to the present invention can be used as a spring steel wire for cold winding that is subjected to quenching and tempering treatment after wire drawing, a spring steel wire for cold winding that is used directly as a steel wire, and a spring steel wire that is subjected to quenching and tempering treatment after spring forming. Such a spring steel wire is useful as a material for a valve spring, a clutch spring, and a suspension spring used in an engine, a clutch, a suspension, etc.

Brief Description of Drawings

Fig. 1 is a photograph observing the structure of an example.
Fig. 2 is a graph showing the relationship between a $\Delta$HV and the percentage of rejections (number of rejections per 100 pieces) during spring forming.
Fig. 3 is a graph showing the relationship between the tensile strength and the fatigue strength of an OT wire.
Fig. 4 is a graph showing the relationship between the tensile strength of a hard-drawn wire and the fatigue life of a hard-drawn spring.

Description of Embodiments

The present inventors have studied from various angles in order to obtain a spring steel wire rod having excellent wire drawability and excellent fatigue characteristics after wire drawing and a spring steel wire having excellent fatigue characteristics and excellent spring formability. As a result, it has been found that:

(a) in order to improve the wire drawability of a spring steel wire rod, it is preferable to (a-1) control the area ratio of a pearlite structure in the entire structure to 85% or more and (a-2) satisfy the component composition that will be described later;
(a-3) in order to further improve the wire drawability of a spring steel wire rod, it is preferable to reduce the content of N dissolved in steel to 0.0020% or less;
(b) in order to improve fatigue characteristics (fatigue characteristics of a spring steel wire rod after wire drawing, namely the fatigue characteristics of a spring steel wire and the fatigue characteristics of a spring), it is particularly preferable to satisfy the component composition that will be described later, and in order to further improve fatigue characteristics, it is preferable to control the sizes and numbers of the precipitated BN type chemical compounds into prescribed ranges; and
(c) in order to improve the spring formability of a spring steel wire, it is preferable to reduce the difference between the Vickers hardness (Hvs) at a surface part and the Vickers hardness (Hvh) at an inner part (hereunder referred to as "$\Delta$HV" in some cases) so as to satisfy the expression (1) below,

$$(Hvs \cdot Hvh) \le 100 \tag{1}.$$

The reasons why the above structure and component composition are stipulated are hereunder explained in detail.

With regard to fatigue characteristics in the present invention, the final goal is to improve the fatigue characteristics of a spring and, in order to attain the final goal, a steel wire used for manufacturing the spring also has to be excellent in fatigue characteristics. From this viewpoint, the fatigue characteristics of a spring steel wire (a hard-drawn wire or an OT wire obtained by applying heat treatment to it) are improved. In the present invention, the fatigue characteristics of a spring and the fatigue characteristics of a steel wire (a hard-drawn wire or an OT wire) are hereunder referred to as merely "fatigue characteristics" occasionally.

[Area ratio of pearlite structure: 85% or more]

In the present invention, the area ratio of a pearlite structure in the entire structure of a spring steel wire rod is set at 85% or more.

Generally as the structure of a spring steel wire rod, besides a pearlite structure, pro-eutectoid ferrite and bainite are formed. If a structure other than a pearlite structure increases, however, wire breakage may occur undesirably during wire drawing (namely, wire drawability is inferior). Even if it stops short of wire breakage, defects are likely to be caused in the interior and fatigue characteristics deteriorate due to the internal defects. In the present invention, wire breakage and internal defects are reduced and wire drawability and fatigue characteristics are improved by increasing the area ratio of a pearlite structure, relatively inhibiting ferrite and the like, and homogenizing a structure. The area ratio of a pearlite structure is preferably 87% or more, yet preferably 90% or more, still yet preferably 91% or more, and particularly preferably 93% or more.

As structures other than a pearlite structure, pro-eutectoid ferrite, bainite, etc. are named as stated above and the lower the percentage thereof, the better. The percentage is preferably 10% or less in total, yet preferably 5% or less in total, and particularly preferably 0%.

In the present invention, from the viewpoint of further improving fatigue characteristics, it is preferable to inhibit BN type chemical compounds having circle equivalent diameters of 100 nm or more. It is preferable that such BN type chemical compounds having circle equivalent diameters of 100 nm or more do not exist but it is possible to inhibit the influence to the minimum by controlling them in the ranges stipulated in the present invention as it will be described below.

Here, since BN type chemical compounds of the above sizes scarcely exist in the structures other than a pearlite structure, the BN type chemical compounds of the above sizes existing in a pearlite structure are stipulated in the present invention.

[Number of BN type chemical compounds having circle equivalent diameters of 100 nm or more but less than 1,000 nm existing in a pearlite structure is 100 or less (including 0) in an observation visual field of 2,000 $\mu m^2$]

In the present invention, it is possible to improve fatigue characteristics by controlling the number of BN type chemical compounds having circle equivalent diameters of 100 nm or more but less than 1,000 nm existing in a pearlite structure to 100 or less (preferably 70 or less and yet preferably 50 or less) in an observation visual field of 2,000 $\mu m^2$.

[Number of BN type chemical compounds having circle equivalent diameters of 1,000 nm or more existing in a pearlite structure is 10 or less (including 0) in an observation visual field of 2,000 $\mu m^2$]

It is also important to inhibit BN type chemical compounds of relatively large sizes having circle equivalent diameters of 1,000 nm or more from precipitating. The reason is that the fatigue characteristics are likely to deteriorate if the number of precipitated coarse BN type chemical compounds increases. In the present invention, the number of coarse BN type chemical compounds existing in a pearlite structure is controlled to 10 or less (preferably 8 or less and yet preferably 5 or less) in an observation visual field of 2,000 $\mu m^2$.

Here, BN type chemical compounds having circle equivalent diameters of less than 100 nm in a pearlite structure scarcely influence fatigue characteristics and hence are not intended to be controlled in the present invention.

The reasons why a component composition is stipulated are explained hereunder.

[C: 0.50% or more but less than 0.70%]

C is an element useful for increasing the tensile strength of a drawn wire rod and securing fatigue characteristics and settling resistance. C is also useful for securing a tensile strength required of a high-stress spring. Further, C is necessary for securing a desired structure and inhibiting the quantity of pro-eutectoid ferrite from increasing and the fatigue life from varying. Consequently, a C content is set at 0.50% or more, preferably 0.52% or more, yet preferably 0.55% or more, and still yet preferably 0.60% or more. If a C content is 0.70% or more in the present invention, however, susceptibility to defects increases, surface defects and cracks originated from inclusions are likely to propagate, and fatigue life deteriorates. In the present invention consequently, a C content is set at less than 0.70%, preferably 0.68% or less, and yet preferably 0.65% or less.

[Si: 1.0-2.5%]

Si is an element contributing to the improvement of strength as a solute strengthening element and also to the improvement of fatigue characteristics and settling resistance. Further, heat treatment is applied as stress relief annealing after coiling in a spring forming process and Si is an element effective for exhibiting excellent softening resistance on that occasion. In order to exhibit the effects sufficiently, the lower limit of an Si content is set at 1.0%. An Si content is preferably 1.3% or more and yet preferably 1.5% or more. If an Si content exceeds 2.5%, however, it is concerned that decarburization increases at a surface and fatigue characteristics deteriorate and moreover a desired structure is not obtained. Consequently, the upper limit of an Si content is set at 2.5%. An Si content is preferably 2.3% or less and yet preferably 2.0% or less.

[Mn: 0.50-1.50%]

Mn is an element to densify and arrange a pearlite structure and improve fatigue characteristics. In order to exhibit the effects, Mn is contained by 0.50% or more. An Mn content is preferably 0.70% or more and yet preferably 0.80% or more. On the other hand, Mn is an element that is likely to segregate and, if the content is excessive, it segregates, micro martensite is formed at a segregated part, and wire drawability is likely to deteriorate. Further, fatigue characteristics are also likely to deteriorate. Consequently, the upper limit of an Mn content is set at 1.50%. An Mn content is preferably 1.30% or less and yet preferably 1.20% or less.

[Cr: 0.5% or less (including 0%)]

Cr is an element effective for narrowing pearlite lamellar intervals, increasing strength after hot rolling or patenting as pre-drawing heat treatment, and improving settling resistance and fatigue strength. From such viewpoints, Cr is contained preferably by 0.05% or more, yet preferably 0.10% or more, still yet preferably 0.15% or more, and particularly preferably 0.20% or more. If a Cr content is excessive, however, cementite is strengthened excessively and toughness and ductility deteriorate. Further, wire drawability and fatigue characteristics also deteriorate. If a Cr content is further excessive, aging embrittlement tends to occur, the difference in hardness between a surface part and an inner part increases, and hence spring formability is inferior. Consequently, the upper limit of a Cr content is set at 0.5%. A Cr content is preferably 0.40% or less, yet preferably 0.35% or less, and still yet preferably 0.30% or less.

[B: 0.0010-0.0050%]

B is an element effective for improving wire drawability and fatigue characteristics of a wire rod by finely precipitating dissolved N as BN type chemical compounds. Further, B is effective also for improving spring formability. Furthermore, B is effective for inhibiting pro-eutectoid ferrite from forming by making a part of B exist as dissolved B in steel. In order to exhibit the effects sufficiently, a B content has to be 0.0010% or more. A B content is preferably 0.0020% or more and yet preferably 0.0030% or more. On the other hand, if a B content exceeds 0.0050%, coarse boron chemical compounds such as $Fe_{23}(CB)_6$ are formed and it is concerned that fatigue strength deteriorates. In the present invention consequently, the upper limit of a B content is set at 0.0050%. A preferable B content is 0.0040% or less.
Here, as elements besides B to fix dissolved N, Ti and the like are named. In the case of Ti, TiN obtained by fixing N has an angular shape in comparison with BN and hence it is estimated that TiN is likely to originate fatigue.

[N: 0.0050% or less (excluding 0%)]

If N is excessive, dissolved N increases and wire drawability, fatigue characteristics, and spring formability deteriorate. It is effective to reduce a total N content in order to reduce the dissolved N content. If N is reduced excessively, however, steelmaking cost increases and hence the upper limit of an N content is set at 0.0050%. An N content is preferably 0.0045% or less and yet preferably 0.0040% or less.

[Dissolved N: 0.0020% or less (including 0%)]

Dissolved N causes aging embrittlement during wire drawing and tends to cause wire breakage during wire drawing and longitudinal cracks. That is, dissolved N tends to cause wire drawability after rolling and wire drawability after patenting to deteriorate. Further, if aging embrittlement advances, the difference in hardness between a surface part and an inner part of a spring steel wire increases and the spring formability of the spring steel wire tends to deteriorate. Consequently, it is preferable to inhibit a dissolved N content to 0.0020% or less by controlling the contents of B and N in steel so as to satisfy the expression (2) below and precipitating the dissolved N as BN. A dissolved N content is yet preferably 0.0015% or less, still yet preferably 0.0010% or less, and particularly preferably 0.0005% or less,

$$B - (N - 0.0020) \times 0.77 \geq 0.0000 \qquad (2).$$

[P: 0.020% or less (excluding 0%)]

P that is an unavoidable impurity is an element to induce wire breakage during wire drawing. Further, P is an element to segregate at prior austenite grain boundaries, embrittle the grain boundaries, and deteriorate fatigue characteristics and hence should be reduced to the least possible extent. In the present invention consequently, a P content is set at 0.020% or less, preferably 0.016% or less, and yet preferably 0.013% or less.

[S: 0.020% or less (excluding 0%)]

S that is an unavoidable impurity is, like P, an element to induce wire breakage during wire drawing. Further, S is an element to segregate at prior austenite grain boundaries, embrittle the grain boundaries, and deteriorate fatigue characteristics and hence should be reduced to the least possible extent. In the present invention, consequently, an S content is set at 0.020% or less, preferably 0.015% or less, and yet preferably 0.010% or less.

[Al: 0.03% or less (excluding 0%)]

Al is contained as a deoxidizing agent during steelmaking. If Al is contained excessively, however, coarse nonmetallic inclusions are generated and fatigue strength is deteriorated, and hence an Al content is controlled to 0.03% or less, preferably 0.010% or less, and yet preferably 0.005% or less.

[O: 0.0020% or less (excluding 0%)]

O is an element to form coarse nonmetallic inclusions and deteriorate fatigue strength if it is contained excessively. In the present invention consequently, an O content is set at 0.0020% or less, preferably 0.0015% or less, and yet preferably 0.0010% or less.

The basic components of a steel material according to the present invention are as stated above and the balance consists of iron and unavoidable impurities (impurities other than P, S, N, and O stated above) but elements brought in in accordance with the circumstances of raw materials, supplemental materials, production equipment, etc. may be allowed to be contained as the unavoidable impurities. Further, in a steel wire rod and a steel wire according to the present invention, if necessary, it is possible to further improve the characteristics by containing appropriate quantities of V and Ni as shown below. The elements are described hereunder in detail.

[One or more elements selected from the group consisting of 0.05-0.40% of V and 0.05-0.80% of Ni]

V and Ni are elements effective particularly for improving wire drawability. Specifically, V is an element useful for improving wire drawability by micronizing a pearlite nodule size and improving the toughness and settling resistance of a spring. In order to exhibit the effects, V is contained by preferably 0.05% or more, yet preferably 0.1% or more, and still yet preferably 0.2% or more. If V is contained excessively in excess of 0.40%, however, hardenability increases, martensite and bainite are formed after hot rolling, and wire drawability rather deteriorates. Further, fatigue characteristics also deteriorate. Furthermore, not only C that should be used as lamellar cementite reduces and strength rather deteriorates but also pro-eutectoid ferrite tends to be generated excessively and ferrite decarburization is likely to be induced. In addition, if a V content is excessive, aging embrittlement is likely to be caused, the difference in hardness between a surface part and an inner part increases, and hence spring formability deteriorates. In the present invention consequently, a V content is set at preferably 0.40% or less and yet preferably 0.30% or less.

Ni is an element effective for improving the ductility of cementite and wire drawability. Further, Ni is an element also to improve the ductility of a steel wire itself. Furthermore, Ni has the effect of inhibiting decarburization at a surface part during hot rolling. In order to exhibit the effects, Ni is contained by preferably 0.05% or more and yet preferably 0.20% or more. If an Ni content is excessive, however, hardenability increases, structures of martensite and bainite are precipitated abundantly after hot rolling, and the deterioration of wire drawability is caused. Further, fatigue characteristics also deteriorate. Consequently, the upper limit of an Ni content is set at preferably 0.80%. An Ni content is yet preferably 0.60% or less and still yet preferably 0.50% or less.

[(Hvs - Hvh) ≤ 100]

As stated in the item (c) earlier, in order to improve the spring formability of a spring steel wire, it is necessary to reduce the difference ($\Delta$HV) between the Vickers hardness (Hvs) at a surface part of the spring steel wire and the Vickers hardness (Hvh) at an inner part thereof so as to satisfy the expression (1) below. The reason is that a spring after subjected to spring forming causes spring back, hence the free length is caused to vary, and, if the difference in hardness between a surface part of a wire rod and an inner part of the wire rod is large, the spring back increases and the free length varies largely.

$$(Hvs \cdot Hvh) \leq 100 \qquad\qquad (1)$$

[Here, Hvs represents the maximum Vickers hardness at the part of D (diameter of a steel wire)/16 to the part of D/4 and Hvh represents the minimum Vickers hardness at the part of D/4 to the part of D/2]

In order to satisfy the expression (1), it is necessary to inhibit heat generation during wire drawing and that can be attained by controlling a wire drawing rate during wire drawing to 300 m/min. or lower in the present invention as it will be described later. Further, it is also effective to control B and N contents into stipulated ranges, reduce a dissolved N content, and control Cr and V contents into stipulated ranges.

The production conditions for obtaining a spring steel wire rod and a spring steel wire according to the present invention are not particularly limited as long as conditions for controlling a stipulated structure and the shape of BN type chemical compounds can be secured. In the production processes, however, it is preferable: to control the coiling temperature after hot rolling and the cooling conditions after hot rolling as shown below in order to use a cast steel having the aforementioned chemical component composition and secure the aforementioned structure effectively; and to control the heating conditions before break down rolling as shown below in order to effectively control the recommended shape of BN type chemical compounds.

[Heating before break down rolling: 30 min. or longer to 90 min. or shorter at 1,280°C or higher]

[Cooling rate in the temperature range of 1,280°C to 1,100°C before the commencement of break down rolling: 0.5°C/sec. or more]

It is possible to: sufficiently dissolve BN type chemical compounds in steel by controlling the heating temperature before break down rolling to 1,280°C or higher; and successively control the shape of the BN type chemical compounds into stipulated ranges and further improve fatigue characteristics by controlling the cooling rate in the temperature range of 1,280°C to 1,100°C before the commencement of break down rolling to 0.5°C/sec. or more. The heating temperature before break down rolling is preferably 1,290°C or higher.

Further, BN type chemical compounds cannot dissolve sufficiently in steel when the heating time at 1,280°C or higher is too short and hence the heating time at 1,280°C or higher is set at 30 min. or longer. Meanwhile, the heating time at 1,280°C or higher is set at 90 min. or shorter from the viewpoint of operating cost.

Furthermore, the cooling rate in the temperature range of 1,280°C to 1,100°C before the commencement of break down rolling is set at preferably 1.0°C/sec. or more, yet preferably 1.3°C/sec. or more, and still yet preferably 1.5°C/sec. or more.

[Coiling temperature after hot rolling: 850°C or higher to 950°C or lower]

A coiling temperature after hot rolling should be set at 850°C or higher so as not to give excessive load to a rolling mill. A preferable coiling temperature after hot rolling is 880°C or higher. On the other hand, a coiling temperature after hot rolling should be set at 950°C or lower in order to inhibit pro-eutectoid ferrite and secure an area ratio of a pearlite structure of 85% or more. From the viewpoints of inhibiting surface decarburization, recrystallization, and grain growth and obtaining a fine grain structure, a coiling temperature after hot rolling should be set at 950°C or lower, preferably 940°C or lower, and yet preferably 930°C or lower.

[Cooling rate after coiling to 600°C after hot rolling: 10°C/sec. or more to 35 C/sec. or less]

In order to secure an area ratio of a pearlite structure of 85% or more, pro-eutectoid ferrite should be inhibited from forming by setting a cooling rate after coiling to 600°C after hot rolling at 10°C/sec. or more (preferably 15°C/sec. or more and yet preferably 20°C/sec. or more) and the structures of martensite and bainite should be inhibited from forming by setting the cooling rate at 35 C/sec. or less (preferably 30 C/sec. or less).

In the event of obtaining a spring steel wire rod according to the pre sent invention, conditions other than the aforementioned conditions are not particularly limited and ordinary manufacturing conditions may be adopted.

Further, in order to obtain a spring steel wire having a difference of 100 or less between the Vickers hardness (Hvs) at a surface part and the Vickers hardness (Hvh) at an inner part, it is necessary to use a spring steel wire rod stipulated in the present invention and inhibit heat generation during wire drawing and hence it is recommendable to set a wire drawing rate at 300 m/min. or less (preferably 250 m/min. or less). The lower limit of the wire drawing rate should be about 100 m/min. from the viewpoint of productivity and others.

In the event of obtaining a spring steel wire according to the present invention, conditions other than the aforementioned conditions are not particularly limited and ordinary manufacturing conditions may be adopted.

[Examples]

The present invention is hereunder explained more specifically in reference to examples, but naturally is not limited by the examples, and can appropriately be modified within the range conforming to the anteroposterior tenors and the modifications are all included in the technological scope of the present invention.

The steels of the chemical component compositions shown in Table 1 below were tapped from a converter, successively refined by secondary refining treatment, and casted by a continuous casting method and thus cast steels were produced. Then the obtained cast steels were heated under the conditions shown in Table 2 (heating time was not changed among the steel types and the temperature was maintained for 30 minutes after elevated to a prescribed temperature) before break down rolling, successively subjected to break down rolling to form a 155 mm square cross section, and successively hot-rolled under the conditions shown in Table 2 [coiling temperature after hot rolling (coiling temperature at rolling) and cooling rate after coiling to 600°C (post-coiling cooling rate)] and thus the hot-rolled wire rods (steel wire rods) 8.0 mm in diameter were produced. Here, the dissolved N contents shown in Table 1 below are measured by the following method.

Further, with regard to each of the obtained steel wire rods, the area ratio of a pearlite structure and the number of BN type chemical compounds were measured by the following methods. The results are shown in Table 2 below.

[Table 1]

| Steel type code | Chemical component (% by mass), balance consisting of iron and unavoidable impurities | | | | | | | | | | | | Dissolved N content | Value of the left side in expression (2) |
|---|---|---|---|---|---|---|---|---|---|---|---|---|---|---|
| | C | Si | Mn | P | S | Cr | Ni | V | Al | B | N | O | (% by mass) | (% by mass) |
| A | 0.62 | 1.96 | 0.89 | 0.016 | 0.007 | 0.16 | - | - | 0.002 | 0.0031 | 0.0038 | 0.0013 | 0.0000 | 0.0017 |
| B | 0.63 | 2.11 | 1.21 | 0.011 | 0.009 | 0.33 | - | - | 0.016 | 0.0038 | 0.0040 | 0.0007 | 0.0003 | 0.0023 |
| C | 0.52 | 2.33 | 1.03 | 0.009 | 0.011 | 0.19 | - | - | 0.003 | 0.0025 | 0.0026 | 0.0011 | 0.0001 | 0.0020 |
| D | 0.68 | 1.38 | 0.66 | 0.014 | 0.006 | 0.36 | - | 0.23 | 0.002 | 0.0041 | 0.0024 | 0.0010 | 0.0000 | 0.0038 |
| E | 0.63 | 1.99 | 1.31 | 0.013 | 0.014 | 0.22 | 0.51 | - | 0.007 | 0.0031 | 0.0021 | 0.0009 | 0.0005 | 0.0030 |
| F | 0.55 | 1.45 | 0.71 | 0.016 | 0.011 | 0.47 | 0.29 | 0.34 | 0.002 | 0.0026 | 0.0033 | 0.0011 | 0.0001 | 0.0016 |
| G | 0.63 | 1.33 | 1.11 | 0.001 | 0.001 | 0.41 | - | - | 0.004 | 0.0014 | 0.0041 | 0.0012 | 0.0022 | -0.0002 |
| Z | 0.59 | 1.88 | 0.91 | 0.013 | 0.008 | - | - | - | 0.003 | 0.0031 | 0.0041 | 0.0010 | 0.0001 | 0.0015 |
| AA | 0.64 | 1.76 | 0.76 | 0.011 | 0.007 | - | - | - | 0.002 | 0.0038 | 0.0033 | 0.0009 | 0.0000 | 0.0028 |
| H | 0.52 | 2.33 | 1.03 | 0.009 | 0.011 | 0.19 | - | - | 0.003 | 0.0025 | 0.0026 | 0.0011 | 0.0001 | 0.0020 |
| I | 0.63 | 1.77 | 0.91 | 0.011 | 0.009 | 0.23 | - | - | 0.003 | 0.0030 | 0.0038 | 0.0012 | 0.0003 | 0.0016 |
| J | 0.65 | 1.88 | 1.33 | 0.009 | 0.011 | 0.18 | 0.22 | 0.33 | 0.003 | 0.0038 | 0.0033 | 0.0011 | 0.0000 | 0.0028 |
| K | 0.57 | 1.86 | 1.11 | 0.014 | 0.008 | 0.38 | 0.33 | - | 0.003 | 0.0028 | 0.0034 | 0.0012 | 0.0001 | 0.0017 |
| L | 0.77 | 1.88 | 0.99 | 0.016 | 0.010 | 0.26 | - | - | 0.004 | 0.0034 | 0.0029 | 0.0011 | 0.0002 | 0.0027 |
| M | 0.46 | 1.73 | 1.33 | 0.011 | 0.010 | 0.31 | - | - | 0.003 | 0.0041 | 0.0041 | 0.0014 | 0.0001 | 0.0025 |
| N | 0.61 | 2.73 | 1.13 | 0.009 | 0.011 | 0.15 | 0.24 | - | 0.004 | 0.0033 | 0.0038 | 0.0016 | 0.0002 | 0.0019 |
| O | 0.63 | 1.33 | 1.72 | 0.011 | 0.006 | 0.30 | - | - | 0.004 | 0.0031 | 0.0028 | 0.0017 | 0.0002 | 0.0025 |
| P | 0.59 | 1.94 | 0.77 | 0.031 | 0.010 | 0.22 | - | 0.21 | 0.003 | 0.0029 | 0.0041 | 0.0011 | 0.0001 | 0.0013 |
| Q | 0.66 | 1.69 | 0.91 | 0.011 | 0.029 | 0.41 | - | - | 0.006 | 0.0041 | 0.0028 | 0.0013 | 0.0001 | 0.0035 |
| R | 0.59 | 2.10 | 0.97 | 0.013 | 0.011 | 0.71 | - | 0.13 | 0.013 | 0.0029 | 0.0033 | 0.0011 | 0.0000 | 0.0019 |
| S | 0.55 | 2.01 | 1.02 | 0.009 | 0.008 | 0.09 | 0.93 | - | 0.009 | 0.0036 | 0.0039 | 0.0009 | 0.0002 | 0.0021 |
| T | 0.61 | 2.23 | 1.03 | 0.016 | 0.009 | 0.17 | - | 0.56 | 0.003 | 0.0039 | 0.0041 | 0.0006 | 0.0000 | 0.0023 |

(continued)

| Steel type code | Chemical component (% by mass), balance consisting of iron and unavoidable impurities | | | | | | | | | | | | Dissolved N content (% by mass) | Value of the left side in expression (2) (% by mass) |
|---|---|---|---|---|---|---|---|---|---|---|---|---|---|---|
| | C | Si | Mn | P | S | Cr | Ni | V | Al | B | N | O | | |
| U | 0.62 | 1.77 | 0.92 | 0.011 | 0.010 | 0.15 | - | - | 0.038 | 0.0028 | 0.0034 | 0.0012 | 0.0000 | 0.0017 |
| V | 0.57 | 1.81 | 1.32 | 0.011 | 0.007 | 0.31 | 0.31 | - | 0.007 | 0.0063 | 0.0042 | 0.0008 | 0.0002 | 0.0046 |
| W | 0.52 | 2.03 | 1.38 | 0.013 | 0.010 | 0.26 | - | 0.32 | 0.003 | 0.0003 | 0.0041 | 0.0011 | 0.0035 | -0.0013 |
| X | 0.66 | 1.92 | 0.99 | 0.009 | 0.006 | 0.19 | - | - | 0.006 | 0.0033 | 0.0066 | 0.0014 | 0.0022 | -0.0002 |
| Y | 0.52 | 2.03 | 0.79 | 0.014 | 0.016 | 0.43 | 0.19 | - | 0.008 | 0.0040 | 0.0036 | 0.0028 | 0.0001 | 0.0028 |

[Table 2]

| Example No. | Steel type code | Manufacturing conditions | | | | Pearlite area ratio | Number of BN type chemical compounds* | |
|---|---|---|---|---|---|---|---|---|
| | | Heating temperature before break down rolling [°C] | Cooling rate before break down rolling [°C /sec] | Coiling temperature at rolling [°C] | Cooling rate after coiling [°C/sec] | [%] | 100 nm or more but less than 1,000 nm [pieces] | 1,000 nm or more [pieces] |
| 1 | A | 1290 | 1.7 | 911 | 22 | 90 | 22 | 0 |
| 2 | A | 1290 | 1.7 | 930 | 28 | 93 | 24 | 1 |
| 3 | B | 1308 | 1.6 | 891 | 17 | 88 | 41 | 1 |
| 4 | B | 1308 | 1.6 | 880 | 23 | 91 | 36 | 2 |
| 5 | C | 1321 | 2.0 | 907 | 22 | 92 | 11 | 0 |
| 6 | C | 1321 | 2.0 | 891 | 16 | 87 | 23 | 0 |
| 7 | D | 1285 | 1.3 | 873 | 21 | 91 | 61 | 4 |
| 8 | D | 1285 | 1.3 | 897 | 25 | 93 | 53 | 3 |
| 9 | E | 1293 | 2.2 | 915 | 29 | 87 | 33 | 2 |
| 10 | F | 1310 | 1.4 | 933 | 24 | 94 | 14 | 1 |
| 11 | G | 1293 | 1.8 | 881 | 23 | 87 | 41 | 2 |
| 12 | Z | 1316 | 1.6 | 910 | 25 | 92 | 21 | 1 |
| 13 | AA | 1309 | 1.5 | 924 | 22 | 94 | 38 | 2 |
| 14 | A | 1290 | 1.7 | 971 | 18 | 78 | 26 | 1 |
| 15 | B | 1308 | 1.6 | 922 | 8 | 83 | 42 | 2 |
| 16 | H | 1242 | 0.4 | 931 | 21 | 92 | 134 | 8 |
| 17 | I | 1230 | 2.0 | 893 | 21 | 90 | 79 | 13 |
| 18 | J | 1241 | 1.6 | 889 | 16 | 87 | 69 | 15 |
| 19 | K | 1294 | 0.4 | 917 | 22 | 92 | 121 | 11 |
| 20 | L | 1320 | 1.6 | 889 | 29 | 96 | 35 | 2 |
| 21 | M | 1303 | 1.6 | 876 | 26 | 81 | 36 | 0 |
| 22 | N | 1288 | 1.7 | 889 | 19 | 83 | 41 | 2 |
| 23 | O | 1281 | 1.7 | 887 | 22 | 88 | 41 | 2 |
| 24 | P | 1292 | 1.9 | 911 | 20 | 93 | 38 | 1 |
| 25 | Q | 1300 | 1.6 | 921 | 18 | 92 | 50 | 0 |
| 26 | R | 1302 | 2.1 | 905 | 24 | 91 | 27 | 4 |
| 27 | S | 1312 | 1.9 | 893 | 24 | 89 | 22 | 0 |
| 28 | T | 1308 | 2.0 | 923 | 21 | 94 | 28 | 0 |
| 29 | U | 1291 | 2.2 | 876 | 29 | 93 | 24 | 1 |
| 30 | V | 1321 | 1.8 | 933 | 21 | 95 | 38 | 2 |
| 31 | w | 1306 | 0.8 | 921 | 28 | 81 | 0 | 0 |

(continued)

| Example No. | Steel type code | Manufacturing conditions | | | | Pearlite area ratio | Number of BN type chemical compounds* | |
|---|---|---|---|---|---|---|---|---|
| | | Heating temperature before break down rolling [°C] | Cooling rate before break down rolling [°C /sec] | Coiling temperature at rolling [°C] | Cooling rate after coiling [°C/sec] | [%] | 100 nm or more but less than 1,000 nm [pieces] | 1,000 nm or more [pieces] |
| 32 | X | 1293 | 1.5 | 877 | 28 | 89 | 41 | 0 |
| 33 | Y | 1285 | 1.6 | 892 | 24 | 95 | 39 | 1 |
| *Number of pieces existing in a pearlite structure in an observation visual field of 2,000 $\mu$m$^2$ | | | | | | | | |

[Measurement method of dissolved N content]

With regard to the value of a "dissolved N content" in the present invention, a dissolved N content in steel was obtained by subtracting a total N chemical compound content from a total N content in the steel as shown in the items (a) to (c) below in compliance with JIS G 1228.

(a) A total N content in steel was measured by an inert gas fusion method/thermal conductivity method. Specifically, a total N content was obtained from the change of a thermal conductivity by cutting out a sample from a test steel material, putting then sample in a crucible, melting the sample in an inert gas flow and extracting N, and transferring it to a thermal conductivity cell.

(b) A total N chemical compound content in steel was measured by an ammonia distillation separation indophenol blue absorption photometry. Specifically, a sample was cut out from a test steel material and galvanostatic electrolysis was applied in a 10% AA system electrolyte (electrolyte of a non-aqueous solvent system not generating a passive film on a steel surface and specifically comprising 10% acetylacetone and 10% tetramethylammonium chloride with the balance consisting of methanol). The sample of about 0.5 g was dissolved in the galvanostatic electrolysis and the undissolved residue (N chemical compounds) was obtained by filtering with a filter comprising polycarbonate and having a pore size of 0.1 $\mu$m. Then the undissolved residue was heated and decomposed in sulfuric acid, potassium sulfate, and pure Cu chip and mixed with a filtrate. Successively, the solution was alkalified by sodium hydroxide, then steam distillation was applied, and the distilled ammonia was absorbed in dilute sulfuric acid. Then a blue complex was generated by adding phenol, sodium hypochlorite, and sodium pentacyanonitrosyl ferrate (III), the absorbance was measured with a photometer, and thus a total N chemical compound content is obtained.

(c) A dissolved N content in steel was obtained by subtracting a total N chemical compound content from a total N content in the steel obtained by the above methods.

[Measurement method of pearlite area ratio]

With regard to a pearlite area ratio, a photograph in a visual field (region of 200 $\mu$m $\times$ 200 $\mu$m with 400 magnification, the same shall apply hereunder) was taken at four sites forming right angles to each other (at a position of D/2, four sites being adjacent to the center of a cross section so as not to overlap each other and forming right angles to each other, the same shall apply hereunder) with an optical microscope after a hot-rolled wire rod was embedded and polished and subjected to chemical corrosion with picric acid at each of the positions of a surface part, D/4, and D/2 (D: diameter of a wire rod) in the cross section (cross section perpendicular to the rolling direction, the same shall apply hereunder). The image of an optical microscope photograph was printed out, the white part (ferrite and bainite) was filled with a black marker from above a transparent film lapped thereover, successively the transparent film was taken into a personal computer with a scanner, and the image was binarized with image analysis software (" Image Pro Plus" (trade name) made by Media Cybernetics, Inc.), successively the percentage of the not-filled part was obtained as a pearlite area ratio, and the average of the values obtained at twelve visual fields in total was computed. Here, when a decarburized layer existed at a surface part, a totally decarburized part stipulated in paragraph 4 of JIS G 0058 was excluded from the measurement sites.

[Measurement of shape of BN type chemical compounds]

FE-SEM observation was carried out in a visual field with 2,000-time magnification at each of four sites forming right angles to each other after a hot-rolled wire rod was embedded and polished and subjected to chemical corrosion with nital at a position of D/4 (D: wire rod diameter) in a cross section. Here, one visual field is 2,000 $\mu m^2$. After the part of ferrite and bainite in an observed image was blacked out, BN type chemical compounds having circle equivalent diameters of 100 nm or more but less than 1,000 nm and BN type chemical compounds having circle equivalent diameters of 1,000 nm or more were judged by binarizing the image with image analysis software (" Image Pro Plus" (trade name) made by Media Cybernetics, Inc.) and the composition of each of the precipitates was identified with an EDX (Energy Dispersive X-ray Spectrometer) and a WDS (Wavelength Dispersive X-ray Spectrometer). Then the number of the BN type chemical compounds having each of the above sizes was measured at each visual field and successively an average number in four visual fields was computed.

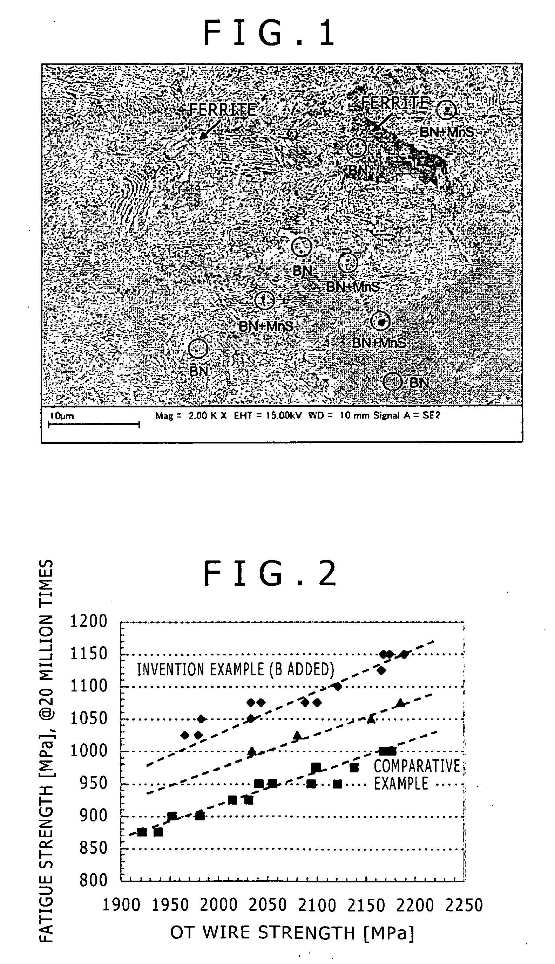

Fig. 1 is an example of a photograph observed before ferrite and the like are blackened out.

Successively, wire drawability was evaluated with the obtained hot-rolled wire rods as follows.

[Evaluation of wire drawability]

In the present example, in order to evaluate wire drawability severely, a wire drawing condition ($\varepsilon$ = 2.17) that was severer than an ordinarily adopted wire drawing condition (for example, a wire drawing condition in the fatigue test sample manufacturing process that will be described later: $\varepsilon$= 1.81) was adopted. The details are described below.

That is, an obtained hot-rolled wire rod was subjected to acid pickling and bonderizing and successively drawn from 8.0 mm in diameter to 2.70 mm in diameter (e= 2.17) (wire drawing rate was set at 200 m/min. at the diameter of 2.70 mm) by dry wire drawing (die schedule is shown in Table 3 below) and thus a steel wire was obtained. Then torsion test was carried out with the obtained steel wire. In the torsion test, a steel wire (test piece) 350 mm in length was used, a torsion tester made by Maekawa Testing Machine MFG. Co, LTD. is used, and the steel wire was twisted until it broke under the conditions of a distance between gauge points of 200 mm and a twist speed of 50 rpm. Then a case where no longitudinal crack is caused at a fracture face after breakage was evaluated as good wire drawability (o) and a case where a longitudinal crack was caused at a fracture face after breakage was evaluated as poor wire drawability (x). Further, a case where wire breakage was caused during wire drawing was evaluated also as poor wire drawability (x). The results are shown in Table 5.

Here, with regard to the example No. 11 in Table 5 that will be described later, a steel wire obtained by applying wire drawing under an ordinarily adopted wire drawing condition ($\varepsilon$= 1.81, a wire drawing condition in the fatigue test sample manufacturing process that will be described later, Table 4 below) was also subjected to torsion test and evaluated in the same way as stated above.

Further, wire drawing rate was varied, steel wires having different $\Delta$HVs were produced, and the spring formability of each of the steel wires was evaluated as shown below. Here, since a hard-drawn wire had a larger $\Delta$HV and poorer spring formability than an OT wire in general, the measurement of a $\Delta$HV and the evaluation of wire formability were evaluated by using a hard-drawn wire. The results are shown in Table 5.

[Table 3]

| Die | 0 | 1 | 2 | 3 | 4 | 5 | 6 | 7 | 8 | 9 | 10 | 11 | 12 |
|---|---|---|---|---|---|---|---|---|---|---|---|---|---|
| Wire shape (mm) | 8.00 | 7.10 | 6.35 | 5.73 | 5.20 | 4.75 | 4.35 | 3.99 | 3.67 | 3.38 | 3.12 | 2.89 | 2.70 |
| Area reduction ratio (%) | | 21.2 | 20.0 | 18.6 | 17.6 | 16.6 | 16.1 | 15.9 | 15.4 | 15.2 | 14.8 | 14.2 | 12.7 |
| True strain | 0.00 | 0.24 | 0.49 | 0.67 | 0.86 | 1.04 | 1.22 | 1.39 | 1.56 | 1.72 | 1.88 | 2.04 | 2.17 |

[Measurement of $\Delta$HV]

A hot-rolled wire rod was subjected to SV (skin shaving, thereby the diameter is reduced from 8.0 mm to 7.4 mm) and dry wire drawing (die schedule is shown in Table 4 below) and thus a steel wire (sample) 3.0 mm in diameter was obtained (the wire drawing rate at the diameter of 3.0 mm is shown in Table 5). The sample was used and Hv was measured at the intervals of 0.1 mm from a position 0.1 mm in depth from a surface to a position 0.1 mm in depth from the other surface on the other side along a diameter line in a cross section of the steel wire at a test load of 300 gf. Then the maximum Hv at the D/16 part to the D/4 part was defined as Hvs, the minimum Hv at the D/4 part to the D/2 part was defined as Hvh, and a $\Delta$HV (= Hvs - Hvh) was obtained.

[Table 4]

| Die | 0 | 1 | 2 | 3 | 4 | 5 | 6 | 7 | 8 | 9 |
|---|---|---|---|---|---|---|---|---|---|---|
| Wire shape (mm) | 7.40 | 6.51 | 5.78 | 5.18 | 4.67 | 4.25 | 3.88 | 3.55 | 3.24 | 3.00 |
| Area reduction ratio (%) | | 22.6 | 21.2 | 19.7 | 18.7 | 17.2 | 16.7 | 16.3 | 16.7 | 14.3 |
| True strain | 0.00 | 0.26 | 0.49 | 0.71 | 0.92 | 1.11 | 1.29 | 1.47 | 1.65 | 1.81 |

[Evaluation of spring formability]

Steel wires obtained at the measurement of $\Delta$HV were subjected to cold coiling with a coiling machine under the conditions of coiling average diameter: 25 mm, number of total turns: 6, number of effective turns: 4, and free length: 80 mm. 100 pieces were coiled for each of the steel wires and free lengths are measured with a projector. Then a piece of 80 mm $\pm$ 0.5 mm was rated as a good piece and a piece other than that was rated as a defective piece. A steel wire having not more than five defective pieces was evaluated as good spring formability (o) and a steel wire having more than five defective pieces was evaluated as poor spring formability ($\times$).

As fatigue characteristics, (i) fatigue characteristics of an OT wire and (ii) fatigue characteristics of a hard-drawn spring obtained from a hard-drawn wire were evaluated as follows. The results are shown in Table 5.

[(i) Fatigue characteristics of OT wire (Nakamura-style rotary bending fatigue test)]

A hot-rolled wire rod was subjected to SV (skin shaving) and dry wire drawing (die schedule is shown in Table 4 above) and thus a steel wire 3.0 mm in diameter is obtained (wire drawing rate at the diameter of 3.0 mm is 200 m/min.). Then the steel wire is subjected to oil tempering treatment (heated to 920°C, tempering temperature is shown in Table 5), annealing, shot peening, and low-temperature stress relief annealing in sequence and thus a test sample was produced.

Then Nakamura-style rotary bending fatigue test was applied to the test sample. Test stresses of 16 levels ranging from 850 to 1,150 MPa at the intervals of 25 MPa were applied, five pieces were tested at each of the stresses, and the maximum test stress at which all of the five pieces reached $2 \times 10^7$ times was defined as the fatigue strength ($\sigma$w) of the test sample. Further, the tensile strength ($\sigma$B) of the steel wire was obtained with a tensile tester ("Autograph" (trade name) made by Shimadzu Corporation) (strain rate: 10 mm/min.). Then $\sigma$w/$\sigma$B was computed and a case where $\sigma$w/$\sigma$B was 0.49 or more was evaluated as a case where an OT wire was excellent in fatigue characteristics and a spring obtained from the OT wire was also evaluated as excellent in fatigue characteristics.

[(ii) Fatigue characteristics of hard-drawn spring]

A spring used for the evaluation of spring formability (namely, a hard-drawn spring formed from a hard-drawn wire not subjected to heat treatment and rated as good in each of the steel types) was subjected to stress relief annealing (400°C $\times$ 20 min.), seating face polishing, two-stage shot peening, low temperature annealing (220°C $\times$ 20 min.), and cold setting. Fatigue test was  applied to the obtained spring under the load stress of 650 $\pm$ 500 MPa and thus fatigue life (breakage life) was measured (hydraulic servo type spring fatigue tester was used). The measurement was applied to five springs for each of the steel types. The value of the shortest fatigue life in the five springs was shown in Table 5. Then a case where the shortest fatigue life is not less than $10 \times 10^6$ times was evaluated as the fatigue characteristics of a spring (and the fatigue characteristics of a hard-drawn wire used for the spring) being excellent. Further, the tensile strength of a steel wire 3.0 mm in diameter after subjected to baking of 400°C $\times$ 20 min. was also measured.

[Table 5]

| Example No. | Wire drawability ε=2.17 | Evacuation of fatigue characteristics of OT wire | | | | Evaluation of spring formability | | | | Evaluation of fatigue characteristics of hard-drawn spring (hard-drawn wire) | |
|---|---|---|---|---|---|---|---|---|---|---|---|
| | | OT wire tempering temperature [°C] | OT wire tensile strength [MPa] | Fatigue strength [MPa] @20 million times | $\sigma w/\sigma B$ | Wire drawing rate [m/min] | $\triangle$ HV [300gf] | Spring formability | Number of rejections | Tensile strength [MPa] | Hard-drawn fatigue life [x $10^6$ times] |
| 1 | ○ | 400 | 2189 | 1150 | 0.53 | 150 | 58 | ○ | 1 | 1891 | 13.1 |
| 2 | ○ | 400 | 2174 | 1150 | 0.53 | 100 | 41 | ○ | 0 | 1881 | 12.2 |
| 3 | ○ | 410 | 2100 | 1075 | 0.51 | 250 | 81 | ○ | 1 | 2044 | 13.2 |
| 4 | ○ | 410 | 2121 | 1100 | 0.52 | 150 | 82 | ○ | 2 | 2024 | 14.8 |
| 5 | ○ | 420 | 1979 | 1025 | 0.52 | 300 | 65 | ○ | 2 | 1951 | 14.8 |
| 6 | ○ | 420 | 1965 | 1025 | 0.52 | 200 | 35 | ○ | 0 | 1918 | 12.1 |
| 7 | ○ | 400 | 2168 | 1150 | 0.53 | 250 | 51 | ○ | 1 | 2031 | 12.8 |
| 8 | ○ | 400 | 2166 | 1125 | 0.52 | 150 | 66 | ○ | 3 | 2010 | 12.8 |
| 9 | ○ | 400 | 2088 | 1075 | 0.51 | 150 | 77 | ○ | 4 | 1998 | 12.9 |
| 10 | ○ | 410 | 2033 | 1050 | 0.52 | 350 | 112 | × | 12 | 2127 | 13.6 |
| 11 | × | 400 | 2033 | 1075 | 0.53 | 150 | 108 | × | 15 | 1910 | 13.7 |
| 12 | ○ | 410 | 1982 | 1050 | 0.53 | 200 | 46 | ○ | 2 | 1788 | 11.5 |
| 13 | ○ | 400 | 2043 | 1075 | 0.53 | 200 | 38 | ○ | 1 | 1831 | 12.3 |
| 14 | × | 410 | 2177 | 1000 | 0.46 | 250 | 91 | ○ | 4 | 1857 | 7.5 |
| 15 | × | 400 | 2168 | 1000 | 0.46 | 200 | 82 | ○ | 4 | 1998 | 8.1 |
| 16 | ○ | 400 | 2155 | 1050 | 0.49 | 250 | 88 | ○ | 3 | 1891 | 11.2 |
| 17 | ○ | 410 | 2080 | 1025 | 0.49 | 200 | 70 | ○ | 3 | 1888 | 10.8 |
| 18 | ○ | 400 | 2185 | 1075 | 0.49 | 150 | 66 | ○ | 3 | 2210 | 13.4 |

(continued)

| Example No. | Wire drawability ε=2.17 | Evacuation of fatigue characteristics of OT wire | | | | Evaluation of spring formability | | | | Evaluation of fatigue characteristics of hard-drawn spring (hard-drawn wire) | |
|---|---|---|---|---|---|---|---|---|---|---|---|
| | | OT wire tempering temperature [°C] | OT wire tensile strength [MPa] | Fatigue strength [MPa] @20 million times | σw/σB | Wire drawing rate [m/min] | ⊿ HV [300gf] | Spring formability | Number of rejections | Tensile strength [MPa] | Hard-drawn fatigue life [x 10$^6$ times] |
| 19 | ○ | 420 | 2034 | 1000 | 0.49 | 300 | 81 | ○ | 3 | 2081 | 12.0 |
| 20 | ○ | 420 | 2170 | 1000 | 0.46 | 150 | 87 | ○ | 4 | 2021 | 6.9 |
| 21 | × | 390 | 1938 | 875 | 0.45 | 200 | 88 | ○ | 4 | 1799 | 7.2 |
| 22 | × | 410 | 2138 | 975 | 0.46 | 250 | 79 | ○ | 3 | 2092 | 8.2 |
| 23 | × | 400 | 1921 | 875 | 0.46 | 200 | 61 | ○ | 2 | 1957 | 7.4 |
| 24 | × | 410 | 2055 | 950 | 0.46 | 200 | 73 | ○ | 3 | 1996 | 7.6 |
| 25 | × | 400 | 1981 | 900 | 0.45 | 150 | 81 | ○ | 3 | 1927 | 3.5 |
| 26 | × | 400 | 2099 | 975 | 0.46 | 150 | 133 | × | 31 | 2151 | 7.3 |
| 27 | × | 400 | 1922 | 875 | 0.46 | 200 | 61 | ○ | 2 | 1805 | 5.7 |
| 28 | × | 410 | 2121 | 950 | 0.45 | 200 | 151 | × | 38 | 2311 | 7.0 |
| 29 | ○ | 410 | 2031 | 925 | 0.46 | 300 | 88 | ○ | 4 | 1921 | 7.9 |
| 30 | × | 400 | 1952 | 900 | 0.46 | 200 | 68 | ○ | 3 | 1922 | 8.0 |
| 31 | × | 400 | 2094 | 950 | 0.45 | 250 | 148 | × | 41 | 2181 | 8.4 |
| 32 | × | 420 | 2014 | 925 | 0.46 | 150 | 143 | × | 33 | 1941 | 5.8 |
| 33 | ○ | 400 | 2041 | 950 | 0.47 | 150 | 72 | ○ | 3 | 1913 | 7.9 |

EP 2 692 885 A1

The following discussions are led from Tables 1, 2, and 5. That is, in the example Nos. (hereunder referred to merely as "No.") 1 to 9, 12, 13, and 16 to 19, requirements stipulated in the present invention are satisfied and hence the steel wire rods (hot-rolled wire rods) are excellent in wire drawability and also the steel wires are excellent in fatigue characteristics (fatigue characteristics of the steel wire rods (hot-rolled wire rods) after wire drawing) and spring formability. Here, from the results of Nos. 16 to 19, it is understood that the shape of BN type chemical compounds should be controlled in the preferable ranges stipulated in the present invention by applying heating under recommendable conditions before break down rolling in the manufacturing processes in order to further improve fatigue characteristics after wire drawing.

In No. 11, the wire drawability was good (o) when wire drawing was applied under the wire drawing condition ($\varepsilon$= 1.81) in the processes of manufacturing the fatigue test samples but the wire drawability was poor (x) when wire drawing was applied under the wire drawing condition ($\varepsilon$= 2.17) of a strain amount larger than that. From the results, it is understood that a dissolved N content should be controlled to 0.0020% or less in order to further improve wire drawability.

In contrast, in Nos. 10, 14, 15, and 20 to 33, at least any one of the requirements stipulated in the present invention is not satisfied and hence drawback is caused. The details are as follows.

In No. 10, although the spring steel wire rod satisfies the requirements stipulated in the present invention and hence was excellent in wire drawability and fatigue characteristics after wire drawing, since the wire drawing rate was too high when wire drawing was applied to the wire rod, the $\Delta HV$ of the obtained steel wire was large and the spring formability was inferior.

In Nos. 14 and 15, although the steel types satisfying the component composition stipulated in the present invention were used, since the coiling temperature at rolling in the manufacturing processes was too high in No. 14 and the cooling rate after coiling in the manufacturing processes was low in No. 15, a pearlite structure was secured insufficiently and the wire drawability and the fatigue characteristics were inferior in both the cases.

In No. 20, since the C content was excessive, the fatigue characteristics were inferior resultantly.

Since the C content was insufficient in No. 21 and the Si content was excessive in No. 22, the pearlite structure was secured insufficiently and the wire drawability and the fatigue characteristics are inferior in both the cases.

In No. 23, since the Mn content was excessive, the wire drawability and the fatigue characteristics were inferior.

Since the P content was excessive in No. 24 and the S content was excessive in No. 25, the wire drawability and the fatigue characteristics were inferior in both the cases.

In No. 26, since the Cr content was excessive, the wire drawability and the fatigue characteristics were inferior. Further, the $\Delta HV$ is large and the spring formability is inferior.

In No. 27, since the Ni content was excessive, the wire drawability and the fatigue characteristics were inferior.

In No. 28, since the V content was excessive, the wire drawability and the fatigue characteristics were inferior. Further, the $\Delta HV$ is large and the spring formability is inferior.

Since the Al content is excessive in No. 29 and the O content is excessive in No. 33, the fatigue characteristics are inferior.

In No. 31, the B content is insufficient, the dissolved N content is relatively large, the pearlite structure is secured insufficiently, and all of the wire drawability, the fatigue characteristics, and the spring formability are inferior.

In No. 32, since the N content is excessive, all of the wire drawability, the fatigue characteristics, and the spring formability are inferior.

Fig. 2 is a graph showing the relationship between a $\Delta HV$ and the percentage of rejections (number of rejections per 100 pieces) during spring forming by using the results of the above examples. From Fig. 2, it is understood that the percentage of rejections can be inhibited sufficiently by controlling a $\Delta HV$ to 100 or less.

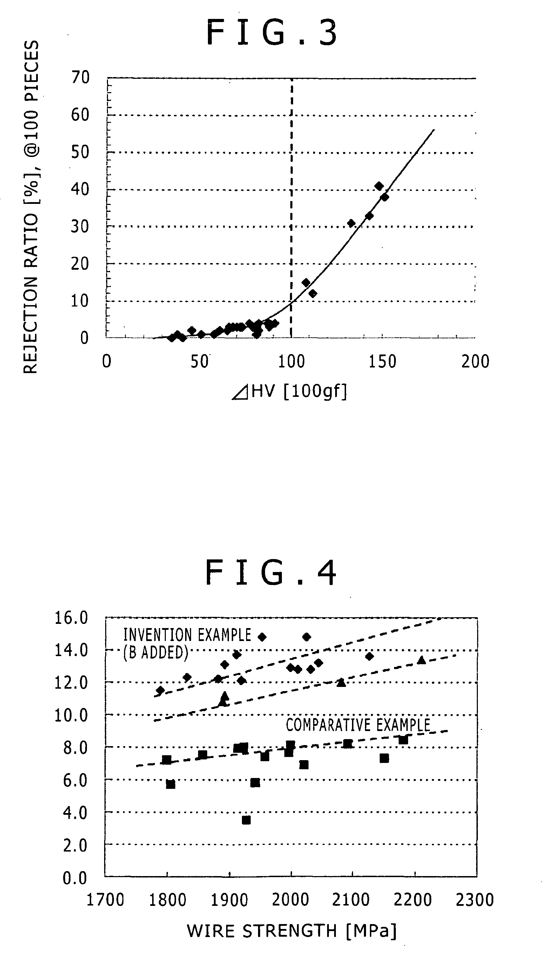

Fig. 3 is a graph showing the relationship between the tensile strength and the fatigue strength of OT wires by using the results of the above examples. From Fig. 3, it is understood that the steel wires (the filled triangle symbols and filled diamond symbols in Fig. 3) satisfying the requirements of the present invention have higher fatigue limit/tensile strength ratios than the comparative example (the filled square symbols). It is understood particularly that the fatigue limit/tensile strength ratio further improves by controlling the shape of the BN type chemical compounds (the filled diamond symbols in Fig. 3).

Fig. 4 is a graph showing the relationship between the tensile strength of a hard-drawn wire and the fatigue life of a hard-drawn spring by using the results of the above examples. From Fig. 4, it is understood that the steel wires (the filled triangle symbols and filled diamond symbols in Fig. 4) satisfying the requirements of the present invention have higher fatigue limit/tensile strength ratios than the comparative example (the filled square symbols). In Fig. 4 too, it is understood that the fatigue limit/tensile strength ratio further improves by controlling the shape of the BN type chemical compounds (the filled diamond symbols in Fig. 4).

From the above results, it is understood that a spring obtained by using a spring steel wire exhibits excellent fatigue characteristics by using a spring steel wire rod according to the present invention not only when an OT wire is used as the spring steel wire but also when a hard-drawn wire is used as the spring steel wire.

**Claims**

1. A spring steel wire rod,
   wherein the spring steel wire rod contains 0.50% or more but less than 0.70% of C (% means "% by mass", the same shall apply for a chemical component composition hereunder),

   1.0-2.5% of Si,
   0.50-1.50% of Mn,
   0.5% or less of Cr (including 0%),
   0.0010-0.0050% of B,
   0.0050% or less of N (excluding 0%),
   0.020% or less of P (excluding 0%),
   0.020% or less of S (excluding 0%),
   0.03% or less of Al (excluding 0%), and
   0.0020% or less of O (excluding 0%),

   with the balance consisting of iron and unavoidable impurities; and
   the area ratio of the pearlite structure in the entire structure is 85% or more.

2. The spring steel wire rod according to Claim 1,
   wherein the number of BN type chemical compounds having circle equivalent diameters of 100 nm or more but less than 1,000 nm existing in a pearlite structure is 100 or less (including 0) in an observation visual field of 2,000 $\mu m^2$; and
   the number of BN type chemical compounds having circle equivalent diameters of 1,000 nm or more existing in a pearlite structure is 10 or less (including 0) in an observation visual field of 2,000 $\mu m^2$.

3. The spring steel wire rod according to Claim 1, wherein the spring steel wire rod further contains one or more elements selected from the group consisting of 0.05-0.40% of V and 0.05-0.80% of Ni.

4. The spring steel wire rod according to Claim 1, wherein dissolved N is 0.0020% or less (including 0%).

5. A spring steel wire having excellent fatigue characteristics and excellent spring formability,
   wherein the spring steel wire is obtained by using a spring steel wire rod according to any one of Claims 1 to 4; and
   the difference between the Vickers hardness (Hvs) at a surface part and the Vickers hardness (Hvh) at an inner part satisfies the expression (1) below,

$$(\text{Hvs} \cdot \text{Hvh}) \leq 100 \qquad (1)$$

   [here, Hvs represents the maximum Vickers hardness at the part of D (referred to as the diameter of a steel wire, the same shall apply hereunder)/16 to the part of D/4 and Hvh represents the minimum Vickers hardness at the part of D/4 to the part of D/2].

# F I G . 1

# F I G . 2

# FIG.3

# FIG.4

<table>
<tr><td colspan="2"><b>INTERNATIONAL SEARCH REPORT</b></td><td>International application No.<br>PCT/JP2012/055994</td></tr>
</table>

| A. CLASSIFICATION OF SUBJECT MATTER |
|---|
| *C22C38/00*(2006.01)i, *C22C38/34*(2006.01)i, *C22C38/54*(2006.01)i, *F16F1/02* (2006.01)i, *C21D8/06*(2006.01)n, *C21D9/52*(2006.01)n |

According to International Patent Classification (IPC) or to both national classification and IPC

| B. FIELDS SEARCHED |
|---|
| Minimum documentation searched (classification system followed by classification symbols)<br>C22C38/00, C22C38/34, C22C38/54, F16F1/02, C21D8/06, C21D9/52 |

Documentation searched other than minimum documentation to the extent that such documents are included in the fields searched

| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 2002-180199 A (Kobe Steel, Ltd.),<br>26 June 2002 (26.06.2002),<br>claims; table 1<br>& US 2003/0024610 A1 & EP 1347072 A1<br>& WO 2002/050328 A1 & DE 60129463 D<br>& DE 60129463 T | 1,3,4<br>2,5 |
| Y<br>A | JP 2007-039800 A (Nippon Steel Corp.),<br>15 February 2007 (15.02.2007),<br>paragraph [0025]<br>& US 2009/0229711 A1 & EP 1897964 A1<br>& WO 2007/001057 A1 & KR 10-2008-0017465 A<br>& CN 101208446 A & KR 10-0995160 B | 1,3,4<br>2,5 |

| ☒ | Further documents are listed in the continuation of Box C. | ☐ | See patent family annex. |
|---|---|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>18 May, 2012 (18.05.12) | Date of mailing of the international search report<br>05 June, 2012 (05.06.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/055994

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2006-028619 A  (Sumitomo Metal Industries, Ltd.),<br>02 February 2006 (02.02.2006),<br>paragraph [0026]<br>(Family: none) | 1,3,4<br>2,5 |

Form PCT/ISA/210 (continuation of second sheet) (July 2009)

**REFERENCES CITED IN THE DESCRIPTION**

**Patent documents cited in the description**

- JP 2002180200 A
- JP 2009024245 A